# EUROPEAN PATENT APPLICATION

(11) **EP 2 144 089 A1**
(43) Date of publication of application: **13.01.2010**
(21) Application number: 08751604.3
(22) Date of filing: 24.04.2008
(51) Int. Cl.: G01T 3/06, G01T 1/29, H01J 31/50

(54) **RADIOGRAPHY MEASURING DEVICE AND RADIOGRAPHY MEASURING METHOD**

(30) Priority: 24.04.2007 JP 2007114394
(71) Applicant: Kabushiki Kaisha Toshiba, Minato-ku, Tokyo 105-8001 (JP)
(72) Inventor: NITTOH, Koichi, Tokyo 105-8001 (JP); TSUNOKAWA, Kiyoharu, Tokyo 105-8001 (JP); KONAGAI, Chikara, Yokohama-shi Kanagawa 235-8523 (JP)
(74) Representative: HOFFMANN EITLE
(86) International application number: PCT/JP2008/001079
(87) International publication number: WO 2008/132849

(57) **Abstract**

A neutron reactant layer (220) is directly coated inside an aluminum substrate (200) of an incident window (20). A first scintillator layer (201) is formed inside the neutron reactant layer 220, and a photoelectric conversion layer (202) is formed inside the first scintillator layer (201). A neutron reactant layer (210) is composed of enriched boron carbide (¹⁰B₄C), and generates α-rays from neutrons by a (n, α) reaction in enriched boron. The first scintillator layer (201) is light-emitted by this α-rays.

## Description

### Technical Field

The present invention relates to a radiography measuring apparatus and a radiography measuring method used for a radiography using radiation rays such as X-rays, γ-rays and neutron rays.

### Background Art

When radiation rays such as X-rays and γ-rays transmit a substance, absorption and scattering thereof become different depending on kinds and shapes of constituents thereof. It is possible to grasp a damaged state, a change, a filling state, and so on of the substance by recording the differences as an image into a photograph, a video, a digital file, and so on. This method is generally used as an X-ray photograph diagnosing an inner state of a human body in X-rays. A method to measure an inner state of a substance or a sample to be measured without breaking them is called as a radiography or a nondestructive radiation photographing method.

An image intensifier is generally used in an X-ray and a γ-ray photographing used for a medical diagnose, an industrial nondestructive inspection, and so on to improve sensitivity of photographing system. In the image intensifier, light emitted by a reaction between radiation rays and a scintillator is observed as an electrical signal. It is conceivable to expand a region where the scintillator and the radiation rays react, to improve the sensitivity of the image intensifier. However, at the same time, if the reaction region is expanded, a position resolution of measurement becomes worse for the extent that the reaction region becomes large. Namely, either of the sensitivity or the resolution is to be sacrificed if both of them are tried to be improved.
Accordingly, a method is conventionally used in which the reaction region, namely, a light-emitting region of the scintillator is not expanded, but the electrical signal is electrically amplified after the light is converted into the electrical signal by an optical sensor. The image intensifiers for X-ray and γ-ray are the ones in which an electronic amplification function is built in an image sensor.

In addition, a method in which an irradiation time is made long and a measurement is performed by an integrating function is used as a method obtaining high resolution under low sensitivity. Methods using a film, a photostimulable fluorescent sheet, and so on can be cited as the methods as stated above, but these methods do not have real-time ability, and data cannot be obtained without performing indirect operations such as a development and a reading.

On the other hand, when a difference of kinds and energies of radiations to be measured, a difference resulting from wavelengths of ultraviolet-rays and light are measured, they have to be measured separately depending on each kind. For example, when neutrons and X-rays are measured, the measurement cannot be performed without changing the scintillators reacting with respective radiation rays. A technology is therefore proposed in which mixed radiation rays are distinguished by colors by using plural scintillators having respective sensitivities by each kind of radiation ray, and emitting light in different colors (for example, refer to Reference 1).

However, a method to improve the sensitivity is not defined in the above-stated method, and it is desired to enable to measure the mixed radiation rays with further high sensitivity. Conventionally, the methods are mainly considered in which the reaction region of the reacting scintillator is expanded or the light-emission of the scintillator is electrically amplified by the image intensifier for X-ray, a microchannel plate and so on when it is read by the optical detector.

In the microchannel plate when the electrical amplification is considered, an interval between channels becomes the resolution. Accordingly, there are problems in which it is necessary to prepare the microchannel plate having the channel interval in micron size, and further, amplification characteristics between channels have to be synchronized. Besides, in the X-ray image intensifier, it is impossible to form images if a reacting scintillator at an input surface and a photoelectric conversion surface must be made curved surfaces resulting from an equipotential line at an electric field of an electron lens for amplification.

A transmitted image of X-ray has good sensitivity for heavy metal and so on because gradation of the image has information of electron numbers of an X-ray path. On the other hand, when neutrons are used, a scattering reaction with hydrogen of which mass is almost the same as neutron is remarkable, and it has high sensitivity for water containing hydrogen, plastics, and so on. Besides, it is suitable for imaging of specific neutron absorption materials, such as gadolinium, cadmium, or boron.

A constitution of a perspective imaging by neutron is basically the same as X-ray, and a fluorescent screen reacting with neutrons instead of X-rays is observed by a camera system. ZnS:⁶LiF and Gd₂O₂S:Tb are used for this fluorescent screen, and an SIT tube camera and a CCD camera are used for the camera system. There are many treatises and reports of international conferences as for the neutron radiography in research and development and applied utilization relating to the nondestructive inspection and a visualization measurement and so on, though a history thereof is shorter compared to X-ray, and there is a restriction in neutron source.

There is no example that the neutron image intensifier is used domestically, but Rolls-Royce company performs a real time neutron imaging of fuel and lubricant oil of a gas turbine engine by a neutron image intensifier using a cold neutron source (0.004 eV) at a HERALD reactor of AWRE and a DIDO reactor of AERE Harwell in England in the latter half of 1970's in abroad. The neutron real time imaging in recent years is announced by HMI (Hahn-Meitner-Institut Berlin) in Germany as for the utilization in a field of industry such as applications for a lithium battery and an aircraft engine using cold neutron (Flux: 3 × 10⁹ n/cm²s). However, it is not the image intensifier but a combined constitution of an LiZnS scintillator and a CCD camera.

It is necessary to change a phosphor at an input reaction surface into a phosphor reacting with neutrons, to constitute the image intensifier for neutron. As the phosphor as stated above, ZnS:⁶LiF emitting light by a (n, α) reaction in ⁶Li, Gd₂O₂S:Tb emitting light by a (n, γ) reaction in Gd, and so on are conceivable. A NEUTRON-RADIATION IMAGE INTENSIFIER TUBE of THOMSON TUBES ELECTRONIQUES company which was commercially available before used Gd₂O₂S:Tb at the input reaction surface. This phosphor is also used for the image intensifier for X-ray, and it is impossible to distinctively measure neutrons and X-rays because the phosphor reacts similarly to neutrons, X-rays and γ-rays when they are mixed.
Reference 1: JP-A 11-271453 (KOKAI)

### Disclosure of the Invention

As stated above, in the conventional technologies, it was impossible to observe a transmitted image only by neutron rays in real time or to distinctively observe the transmitted image only by neutron rays and a transmitted image only by X-rays in real time at the same time when radiation rays are mixed, for example, when X-rays and neutron rays are mixed.

Actually, the transmitted images of the radiation rays are significantly different among X-rays, γ-rays, and neutron rays, and materials which can be observed are also different. In particular, behavior of hydrogen based materials and so on existing in metal materials cannot be clearly observed other than neutron-rays. On the other hand, X-rays and γ-rays are suitable for aluminum and metal based structures and so on. Besides, if the above-stated observations can be simultaneously performed in real time with each other, a correlation in real time can be obtained, and it is effective for analyses of behavior and structure thereof.

The present invention is made considering the above-stated problems of the conventional technologies, and an object thereof is to provide a radiography measuring apparatus and a radiography measuring method capable of performing radiography in real time and with high sensitivity even in a case when plural kinds of radiation rays are mixed, and so on.

### (Means for Solving the Problems)

A radiography measuring apparatus according to the present invention includes: a neutron reactant layer formed at an incident window of radiation rays; a first scintillator layer in an acicular state formed on the neutron reactant layer, and emitting light by α-rays or electron-rays emitted by a reaction between the neutron reactant layer and neutrons; a photoelectric conversion layer formed on the first scintillator layer; an electron lens accelerating electrons emitted from the photoelectric conversion layer; a second scintillator layer emitting light by the electrons accelerated by the electron lens; and a camera capturing an image of the light-emission of the second scintillator layer.

A radiography measuring method according to the present invention includes: generating electrons from incident neutrons by using a neutron reactant layer formed at an incident window of radiation rays, a first scintillator layer in an acicular state formed on the neutron reactant layer, and emitting light by α-rays or electron-rays emitted by a reaction between the neutron reactant layer and neutrons, and a photoelectric conversion layer formed on the first scintillator layer; accelerating the electrons by an electron lens; making a second scintillator layer emit light by the accelerated electrons; and capturing an image of the light-emission of the second scintillator layer by a camera.

### Brief Description of the Drawings

[FIG. 1] FIG. 1 is a view schematically illustrating a constitution of a radiography measuring apparatus according to an embodiment of the present invention.
[FIG. 2] FIG. 2 is a view illustrating a substantial cross sectional constitution of the radiography measuring apparatus in FIG. 1.
[FIG. 3] FIGs. 3A and 3B illustrate a constitution of a radiography measuring apparatus according to another embodiment, in which FIG. 3A is a schematic longitudinal sectional view, and FIG. 3B is a front view.
[FIG. 4] FIGs. 4A to 4C are photographs respectively representing examples of photographed images obtained by the radiography measuring apparatus in FIGs. 3A and 3B.
[FIG. 5] FIG. 5A is a substantial sectional view of a conventional radiography measuring apparatus, FIG. 5B is an enlarged sectional view of a portion "A" of FIG. 5A.
[FIG. 6] FIG. 6 is a substantial enlarged sectional view of the conventional radiography measuring apparatus.

### Best Mode for Carrying out the Invention

Hereinafter, details of a radiography measuring apparatus and a radiography measuring method of the present invention are described with reference to the drawings.

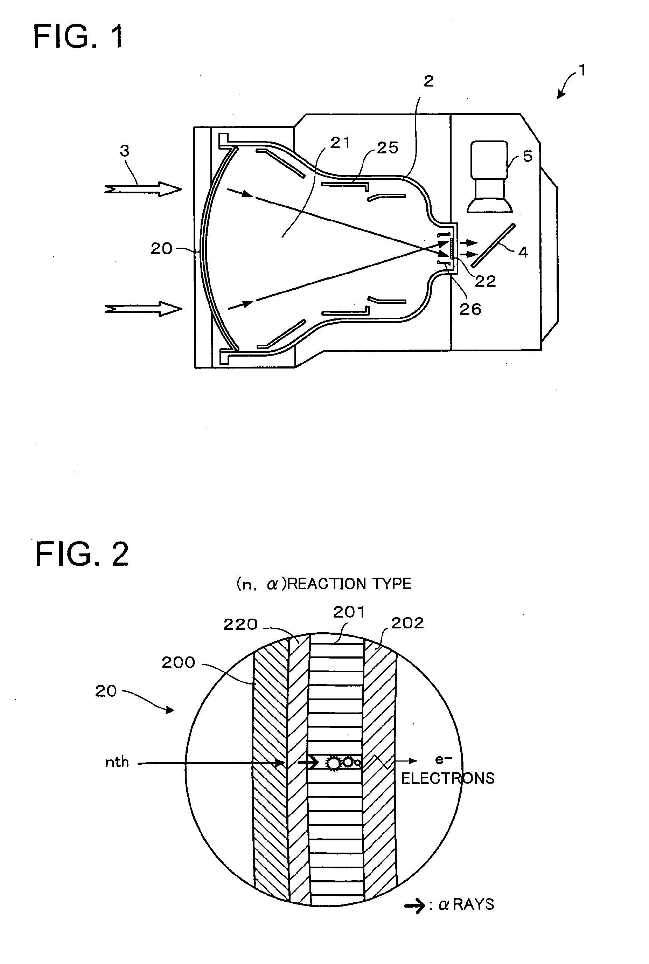

FIG. 1 is a view schematically illustrating an overall constitution of a radiography measuring apparatus according to the present embodiment. As illustrated in FIG. 1, a radiography measuring apparatus 1 includes an image intensifier 2. The image intensifier 2 includes an incident window 20 where radiation rays 3 are incident, an electron lens 21 focusing electrons generated at the incident window 20, and an output phosphor surface 22 constituted by a scintillator layer emitting light by the electrons focused by the electron lens 21. The electron lens 21 is constituted by a focusing electrode 25, an anode 26, and so on.

A mirror 4 and a camera 5 are provided at backward of the output phosphor surface 22 of the image intensifier 2, and it is constituted such that the light-emission of the output phosphor screen 22 is captured as an image by the camera 5. A monochrome scintillator layer emitting light in a single color such as green, or a color scintillator layer emitting light in each color of RGB can be used as the scintillator layer (second scintillator layer) constituting the output phosphor surface 22. In the present embodiment, the output phosphor surface 22 is constituted by the color scintillator layer emitting light in multicolor by the electrons accelerated by the electron lens 21. Besides, a color camera is used as the camera 5 so that the light-emission of the output phosphor surface 22 constituted by the color scintillator layer is image-captured as a color image.

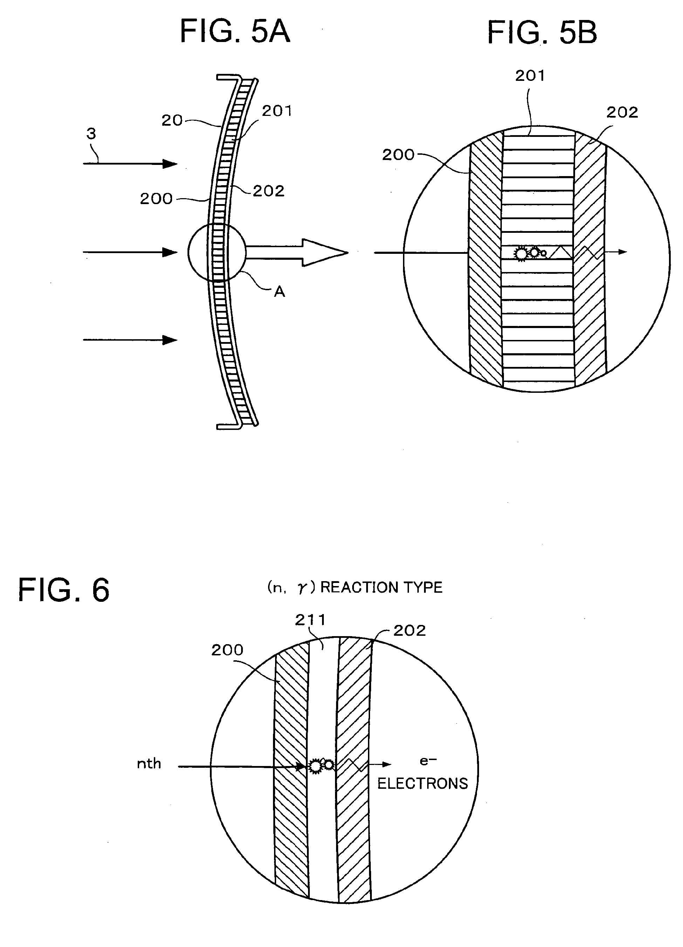

Here, a constitution of a conventional image intensifier of which object is X-ray is described with reference to FIGs. 5. As illustrated in FIG. 5A, an aluminum substrate 200 is provided at the incident window 20, and a scintillator layer 201 is formed inside the aluminum substrate 200. A CsI scintillator easy to react with X-rays is used as the scintillator layer 201 in case of the image intensifier for X-ray. Besides, it has a structure in an acicular state as a means to improve resolution. A photoelectric conversion layer 202 generating electrons from light generated at the scintillator layer 201 is formed on the scintillator layer 201 as illustrated in FIG. 5B.

On the other hand, in case of the image intensifier for neutron ray, it is necessary to use a material effectively reacting with neutrons. FIG. 6 illustrates a constitution when a scintillator layer 211 in a type using a (n, γ) reaction is used. In this case, a material (Gd₂O₂S:Tb) of which base material is gadolinium oxysulf ide and in which terbium is activated is used for the scintillator layer 211. This material was used at a development start time of the conventional image intensifier for X-ray before the acicular scintillator CsI is developed. It reacts with X-rays, but has a mechanism making terbium emit light by internal conversion electrons simultaneously generated by the (n, γ) reaction in Gd as for neutrons.

However, when this scintillator is used as a reactant, it is difficult to distinctively measure neutron rays, X-rays and γ-rays because a density of the scintillator is high and the reaction with X-rays also occurs. For example, it is certain that γ-rays and X-rays mix in addition to neutrons at an irradiation port of a nuclear reactor, an irradiation port of an accelerator, and a californium (Cf) RI radiation source, and so on as general neutron irradiation areas. There is a case when the mixed γ-rays have considerable intensity. Accordingly, it is difficult to remove an influence of mixed γ-rays when the image intensifier by neutron is constituted.

In the present embodiment, a neutron reactant layer 220 is directly coated inside the aluminum substrate 200 of the incident window 20, as illustrated in FIG. 2. The scintillator layer (first scintillator layer) 201 is formed inside the neutron reactant layer 220, and the photoelectric conversion layer 202 is formed inside scintillator layer 201. In the present embodiment, the neutron reactant layer 220 is composed of enriched boron carbide (¹⁰B₄C). This enriched boron carbide generates α-rays from neutrons by a (n, α) reaction in enriched boron (¹⁰B). The scintillator layer 201 is light emitted by this α-rays.

Efficiency of the reaction between enriched boron and neutrons is high, and the neutron reactant layer 220 (enriched boron carbide film) transmits α-rays by reacting with neutrons inside this film, and therefore, a film thickness is desirable to be as thin as possible, to be approximately from a few µm to 10 µm at most. A method in which powdered enriched boron carbide is once sintered in a pellet state with high temperature and pressure, and it is evaporated and deposited by an electron gun can be used to form the enriched boron film, and the film thickness thereof can be controlled.

Acicular CsI can be used as the scintillator layer 201 to be reacted with the above-stated α-rays, but a thickness of the scintillator layer 201 is desirable to be from a few µm to 100 µm or less, considered from a range of α-rays. This scintillator layer 201 can be formed by deposition. It is possible to make the film thickness as thin as possible and to make influences of X-rays and γ-rays as little as possible by combining the enriched boron carbide and the CsI scintillator compared to a type using the conventional gadoliniumoxysulfide scintillator. When the gadolinium oxysulfide scintillator is used, a range of the internal conversion electron which is fluoresced becomes longer than α-ray, and therefore, a thickness of the scintillator layer is necessary to be approximately 100 µm to 200 µm to improve the sensitivity in neutron. However, the reactant of enriched boron carbide emits α-rays without emitting light in itself, and the range thereof is approximately a few micron. Accordingly, the thickness of the scintillator layer 201 can be made thin near approximately two digits compared to the case when the gadolinium oxysulfide scintillator is used.

Besides, in the general image intensifier for X-ray as illustrated in FIGs. 5, the thickness of the scintillator layer 201 is approximately 400 µm, and it is from 1 mm to 2 mm in case of the γ-ray type. Accordingly, it is possible to extremely lower the sensitivity for X-rays and γ-rays by making the thickness of the scintillator layer 201 thin, in case of the embodiment illustrated in FIG. 2. In the measurement using the apparatus of the present embodiment, it is possible to measure and inspect the transmitted image by neutrons when a measurement object emits X-rays and γ-rays, because the sensitivity can be suppressed especially for X-rays and γ-rays as much as possible.

Besides, a method is also conceivable in which metal gadolinium (Gd) is coated as the neutron reactant layer 220 instead of enriched boron carbide, and the scintillator layer 201 composed of CsI emitting light by electron rays is provided thereon. In this case, a thickness of the metal gadolinium layer (neutron reactant layer 220) is desirable to be from over ten µm to several dozen µm or less which is thicker than enriched boron carbide.

In the above-stated embodiment, a constitution capable of performing the measurement by making the influence of X-rays and γ-rays to be a background as small as possible is represented as the image intensifier for neutron. Hereinafter, an embodiment having a constitution capable of simultaneously measuring neutrons, X-rays or γ-rays in real time is described.

In case of a (n, γ) type illustrated in FIG. 6, it is possible to correspond to γ-rays by making a thickness of the scintillator layer 211 (Gd₂O₂S:Tb) to be the reactant thick. However, light-emission of neutrons occurs at an input side, and the light transmits inside the scintillator layer 211. Accordingly, self-absorption of the scintillator layer 211 becomes large, a rate of transmission becomes worse, and detection efficiency of neutron becomes worse. Besides, if the powdered scintillator (Gd₂O₂S:Tb) is made thick, the emitted light scatters and spatial resolution deteriorates.

Accordingly, in the present embodiment, the image intensifier is manufactured in the (n, α) reaction type illustrated in FIG. 2 while setting the thickness of enriched boron carbide (¹⁰B₄C) of the neutron reactant layer 220 approximately from a few µm to 10 µm at most as same as the above-stated embodiment and achieving a crystal growth of the scintillator layer 201 (acicular scintillator layer CsI) up to 0.4 mm or more. In particular, it is desirable to make the thickness of the scintillator layer 201 (acicular scintillator layer CsI) 1 mm or more for γ-rays having high energy.

As a result, neutrons react with enriched boron, and X-rays and γ-rays react with the CsI scintillator. The light is hardly scattered resulting from the acicular crystal of CsI, and the image quality gets rarely dim, though α-rays generated by neutrons reacting with enriched boron react in a vicinity of an entrance at the incident side of the scintillator layer 201.

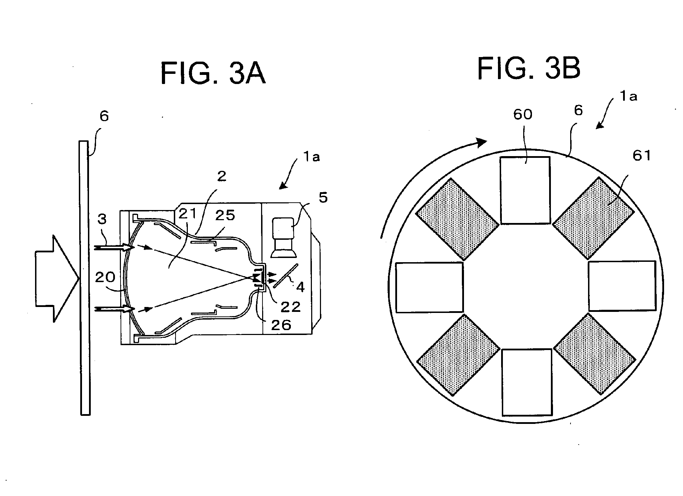

When the image intensifier 2 as stated above is constituted, it reacts with X-rays and γ-rays too, being different from the above-stated embodiment. Accordingly, a rotary disk 6 is set in front of the incident window 20 of the image intensifier 2 as a radiography measuring apparatus 1a illustrated in FIG. 3A. This rotary disk 6 has windows 60 constituted by openings (nothing exists) and windows 61 in which neutron absorbers are embedded by every 90 degrees as illustrated in FIG. 3B. The windows 60, 61 are alternately set in front of the incident window 20 of the image intensifier 2 by rotating the rotary disk 6 by a not-illustrated driving mechanism.
An opening/closing mechanism blocking off and opening a transmit state of neutron is constituted by the above.

A state in which these windows 60, 61 are set is detected by a not-illustrated sensor and so on, and a timing of image capturing of the color camera 5 is synchronized. For example, each one frame by one-thirtieth second of the color camera 5 is synchronized with the window 60 having nothing therein and the next one-thirtieth second is synchronized with the window 61 having the neutron absorber therein. Namely, neutron-rays and γ-rays are incident in case of the window 60 having nothing therein, and only γ-rays are incident on the image intensifier 2 in case of the window 61 having the neutron absorber therein. The image of only γ-rays is subtracted from the image of the image intensifier in which neutron-rays and γ-rays are mixed, and thereby, the image of only neutrons can be obtained, and it becomes possible to observe the neutron-ray image and the γ-ray image independently in real time. For example, a sheet including boron carbide or lithium, a Cd plate, a Gd plate, and the one in which a compound including Gd is processed into a sheet state, and so on can be used as the above-stated neutron absorber. Incidentally, in the radiography measuring apparatus 1a in FIGs. 3, redundant description is not given by adding corresponding reference numerals to portions corresponding to the above-stated radiography measuring apparatus 1 in FIG. 1.

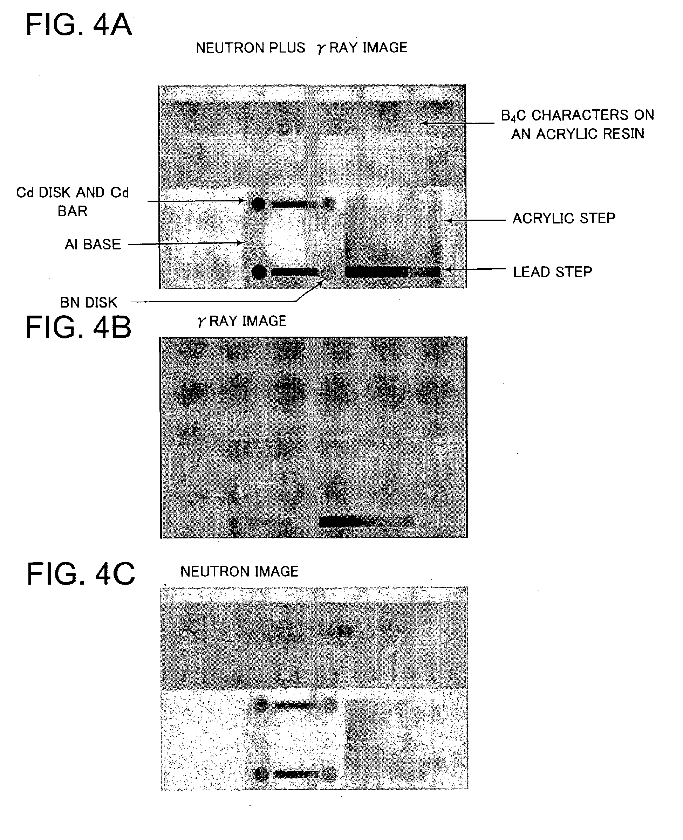

Examples of images in which an indicator for the neutron radiography, characters carved on an acrylic resin, a measure embedding powders of boron carbide (B₄C) in a scale thereof, and so on are photographed by the radiography measuring apparatus 1a illustrated in FIGs. 3 are represented in FIGs. 4. FIG. 4A is a result photographed under a state in which neutrons and γ-rays are mixed, and all of a cadmium (Cd) disk and a Cd bar to be the neutron absorber, a boron nitride (BN) disk, an acrylic step, the B₄C characters on the measure, a lead step to be a γ-ray absorber, and so on are photographed.

It is impossible to identify the material and so on of the neutron absorber only by this image. However, the acrylic step, the B₄C characters, the BN disk, and so on are not photographed, but only the lead step, the Cd disk, the Cd bar are photographed in a result in FIG. 4B photographed through the window 61 having the neutron absorber therein (a state shielding neutrons). The image of only neutrons in FIG. 4C can be obtained by subtracting the image in FIG. 4B from the image in FIG. 4A based on the above-stated result, and the Cd disk, the Cd bar to be the neutron absorber, the BN disk, the acrylic step, the B₄C characters on the measure can be identified. The lead step is not photographed in this image. Conventionally, there has been an example performing the simultaneous radiography of neutrons and γ-rays as stated above by using a film and so on, but only a still image can be obtained in this case. On the other hand, it is possible to perform the simultaneous radiography of neutrons and γ-rays in real time by a moving image according to the present embodiment.

It is described as for neutrons and γ-rays hereinabove, but the present embodiment can be used for an energy difference method with γ-ray by changing the absorber in the window into a low energy X-ray absorber. Here, the energy difference method is a method in which a substance of which material is different is identified by subtracting or dividing respective transmitted images of X-rays and γ-rays having different large and small energies, or a method in which only different materials are extracted as real time images in active tissues such as blood vessels and bones in a human body.

When this energy difference method is used, a value of a tube current is kept constant in X-ray, and a value of a tube voltage corresponding to the energy of X-ray is changed into large and small. At this time, a transmission luminance value becomes high as the tube voltage is high. The difference of the transmission luminance value becomes large depending on the difference of the tube voltage, and therefore, it is difficult to calculate as it is. Accordingly, a filter to decrease the transmission luminance value is provided between a radiation source and the image intensifier when it is in high energy, namely in a state of high tube voltage to equalize the transmission luminance values of backgrounds without any object as much as possible. An X-ray absorber such as tungsten and lead is desirable for this filter. It is impossible to check a different state in real time without switching the state inserting this filter and the state removing this filter and decreasing the tube voltage in an instant. Accordingly, the window having nothing therein or an X-ray absorption window of which thickness is thin, and the X-ray absorption window of which thickness is thick are manufactured by tungsten, lead or a metal plate on the rotary disk 6 illustrated in FIGs. 3, to make it possible to photograph while synchronizing with the camera.

Besides, according to the method of the above-stated embodiment, it is possible to obtain an image with less noise by decreasing an influence by a dose of the background by comparing the image made by a dose from a measurement object with the window having nothing therein and a transmitted image by neutrons or γ-rays, even in a case when the measurement object is in high dose, for example, it is reprocessing fuel, high-level wastes, and so on, and an inside state, a density thereof, or the like is to be measured.

### Industrial Applicability

A radiography measuring apparatus and a radiography measuring method according to the present invention can be utilized in fields of medical diagnosis, industrial nondestructive inspection, and so on. Accordingly, there is industrial applicability.

## Claims

1. A radiography measuring apparatus, comprising:
a neutron reactant layer formed at an incident window of radiation rays;
a first scintillator layer in an acicular state formed on the neutron reactant layer, and emitting light by α-rays or electron-rays emitted by a reaction between the neutron reactant layer and neutrons;
a photoelectric conversion layer formed on the first scintillator layer;
an electron lens accelerating electrons emitted from the photoelectric conversion layer;
a second scintillator layer emitting light by the electrons accelerated by the electron lens; and
a camera capturing an image of the light-emission of the second scintillator layer.

2. The radiography measuring apparatus according to claim 1,
wherein the second scintillator layer is a color scintillator layer emitting light in multicolor by the electrons accelerated by the electron lens; and
wherein the camera is a color camera capturing the image of the light-emission of the color scintillator layer.

3. The radiography measuring apparatus according to claim 1,
wherein the neutron reactant layer is composed of enriched boron carbide generating α-rays from neutrons by a (n, α) reaction in ¹⁰B.

4. The radiography measuring apparatus according to claim 3,
wherein a thickness of the neutron reactant layer composed of enriched boron carbide is from a few µm to 10 µm.

5. The radiography measuring apparatus according to claim 4,
wherein the neutron reactant layer composed of enriched boron carbide is formed by solidifying powdered enriched boron carbide in a pellet state, and this solid enriched boron carbide is evaporated and deposited by an electron gun.

6. The radiography measuring apparatus according to claim 1,
wherein the neutron reactant layer is composed of metal gadolinium.

7. The radiography measuring apparatus according to claim 6,
wherein a thickness of the neutron reactant layer composed of metal gadolinium is from over ten µm to several dozen µm.

8. The radiography measuring apparatus according to claim 1,
wherein a thickness of the first scintillator layer is from a few µm to 100 µm.

9. The radiography measuring apparatus according to claim 1,
wherein a thickness of the first scintillator layer is from several hundred µm to a few mm, and an opening/closing mechanism repeatedly forming a state providing a neutron absorber and a state not providing the neutron absorber by every predetermined time is held in front of the incident window; and
wherein the camera obtains images synchronized with the opening/closing mechanism, and thereby, it is enabled that an image of the state providing the neutron absorber and an image of the state not providing the neutron absorber are alternately obtained.

10. The radiography measuring apparatus according to claim 9,
wherein the opening/closing mechanism includes:
a circular substrate alternately disposing windows constituted by openings and windows providing the neutron absorbers;
a driving mechanism rotating the substrate; and
amechanism detecting a rotation state of the substrate.

11. The radiography measuring apparatus according to claim 1,
wherein a thickness of the first scintillator layer is from several hundred µm to a few mm, and an opening/closing mechanism repeatedly forming a state providing an X-ray absorber and a state not providing the X-ray absorber by every predetermined time is held in front of the incident window; and
wherein the camera obtains images synchronized with the opening/closing mechanism, and thereby, it is enabled that an image of the state providing the X-ray absorber and an image of the state not providing the X-ray absorber are alternately obtained.

12. The radiography measuring apparatus according to claim 11,
wherein the opening/closing mechanism includes:
a circular substrate alternately disposing windows constituted by openings and windows providing the X-ray absorbers;
a driving mechanism rotating the substrate; and
amechanismdetecting a rotation state of the substrate.

13. A radiography measuring method, comprising:
generating electrons from incident neutrons by using
a neutron reactant layer formed at an incident window of radiation rays;
a first scintillator layer in an acicular state formed on the neutron reactant layer, and emitting light by α-rays or electron-rays emitted by a reaction between the neutron reactant layer and neutrons; and
a photoelectric conversion layer formed on the first scintillator layer;
accelerating the electrons by an electron lens;
making a second scintillator layer emit light by the accelerated electrons; and
capturing an image of the light-emission of the second scintillator layer by a camera.

14. The radiography measuring method according to claim 13,
wherein the second scintillator layer is a color scintillator layer emitting light in multicolor by the electrons accelerated by the electron lens; and
wherein the camera is a color camera capturing the image of the light-emission of the color scintillator layer.
